Europäisches Patentamt

European Patent Office

Office européen des brevets

(11) Publication number: **0 389 722**
**A1**

## (12) EUROPEAN PATENT APPLICATION

(21) Application number: **89400613.9**

(22) Date of filing: **03.03.89**

(51) Int. Cl.5: **C08F 8/32**

(43) Date of publication of application:
**03.10.90 Bulletin 90/40**

(84) Designated Contracting States:
**FR**

(71) Applicant: **BP Chimie Société Anonyme**
**Tour Neptune - La Défense 1 20, place de Seine**
**F-92400 Courbevoie(FR)**

(72) Inventor: **The designation of the inventor has not yet been filed**

(74) Representative: **Simonnot, Bernard et al**
**Cabinet Simonnot 35 rue de Clichy**
**F-75442 Paris Cédex 09(FR)**

(54) Synthesis of organic amino carbonyl compounds.

(57) This invention relates to a process for producing long chain alkylamines of the formula (I)

$R-CO-(CH_2)_n-N(R_1)(R_2)$ (I)

wherein R is the long chain aliphatic hydrocarbyl group derivable from a polyolefin, $N(R_1)(R_2)$ is a nitrogen function derivable from a primary or a secondary amine, and n has a value of at least 1. The process has the steps of (a) reacting a polyolefin having a molecular weight in the range of 200-2000 with ozone in the presence of a solvent, (b) reacting the ozonolysis product from (a) with or without separation and/or isolation of the carbonyl amine, of formula $HN(R_1)(R_2)$ and formaldehyde at elevated temperature to form a compounds of formula (I).

The amines so produced are useful gasoline and lube oil additives.

EP 0 389 722 A1

Xerox Copy Centre

## SYNTHESIS OF ORGANIC AMINO CARBONYL COMPOUNDS

This invention relates to a process for producing organic amino carbonyl compounds suitable for use as lube oil or gasoline activities.

Methods of producing nitrogen derivatives having long hydrocarbyl chains are well known. For instance GB-A-1172818 (Monsanto) describes a process for producing Schiff's bases by oxidising a polyolefin with ozone in the presence of an alcohol followed by conversion of the oxidation product to a carbonyl compound and reaction of the carbonyl compound after separation thereof from the ozonolysis products with an amine results in a Schiffs base.

This necessary separation and/or purification of the carbonyl compound from the ozonolysis products prior to reaction with an amine would appear to make the process commercially non-viable.

An alternative method is that described in EP-A-244616 (BASF AG) where a polybutene is subjected to a hydroformylation reaction and the resultant mixture of oxo products is subjected to either (a) a Mannich reaction or (b) a hydroamination reaction.

This reaction has the disadvantage that the hydroformylation product has a mixture of long chain aldehydes, ketones and long chain alcohols. Such a mixture of products, especially the presence of long chain alcohols, which are not separated prior to the Mannich reaction or hydroamination, give a complicated mixture of products.

Moreover, the long chain alcohols may have a detrimental effect on the aminated end product when used eg. as lube oil additives or gasoline additives.

It has now been found that the problems associated with such prior art process can be mitigated by (a) avoiding the separation steps of the GB-A-1172818 and also the hydroformylation step of E-A-244616.

Accordingly, the present invention is a process for producing long chain alkyl amines of the formula

R-CO-(CH_2)_n-N(R_1)(R_2)     (I)

wherein R is the long chain aliphatic hydrocarbyl group derivable from a polyolefin, $N(R_1)(R_2)$ is a nitrogen function derivable from a primary or a secondary amine, and n has a value of at least 1, said process comprising (a) reacting a polyolefin having a molecular weight in the range of 200-2000 with ozone in the presence of a solvent, (b) reacting the ozonolysis product from (a) with or without separation and/or isolation of the carbonyl compounds formed therein with a primary or secondary hydrocarbyl amine, of formula $HN(R_1)(R_2)$ and formaldehyde at elevated temperature to form a compounds of formula (I).

The polyolefin which is ozonolysed is suitably a polymer of a $C_2$-$C_4$ olefin or a copolymer thereof and has a molecular weight in the region of 200-2000, preferably from 500 to 1500. Of these, polybutenes, especially those containing significant proportions of polyisobutene i.e. Hyvis, Napvis and Ultravis (all Registered Trade Marks, ex BP Chemicals) are preferred.

The ozonolysis of the polyolefin in step (a) above is suitably carried out by bubbling ozone in the gaseous phase, with or without an additional diluent, through a solution of the polyolefin in a solvent. Examples of solvents that may be used include alcohols and hydrocarbons, preferably aliphatic, straight chain alcohols which have 1-12 carbon atoms in the chain. In the case of alcohols, these preferably have 1-4 carbon atoms in the chain.

The ozonolysis temperature is suitably from -70 to +50°C, preferably -30 to +30°C and most preferably from -10 to +30°C. The reaction is exothermic and hence care should be taken to ensure that the reaction temperature does not exceed 50°C, if necessary by cooling.

The solvent is suitably present in the reaction mixture in a polyolefin reactant.

For this reaction it is essential to ensure that the proportion of ozone to olefin reacted at a given temperature and pressure are such that no explosive mixtures are formed. The explosive limits for the various reaction conditions are well known to those skilled in the art.

The ozonolysis products from step (a) are contacted with an amine of the formula $HN(R_1)(R_2)$ and formaldehyde in step (b). For this step the ozonolysis products maybe used directly, i.e. without any prior separation step, for reaction with the amine and formaldehyde. Prior to contact of the ozonolysis products with the amine and formaldehyde, it is preferable to (i) remove any excess ozone therein by sparging an inert gas eg. nitrogen therethrough and (ii) in case low boiling carbonyl by-products other than formaldehyde are formed, to wash the ozonolysis products with water in order to remove any such lower boiling fractions eg. acetone.

The amines $HN(R_1)(R_2)$ used to react with the ozonolysis product may be primary or secondary amino compounds and may be one or more of mono- di- and polyamines in which $R_1$ and $R_2$ are the same or different groups and may be aliphatic, alicyclic, aromatic or heterocyclic in nature. The groups $R_1$ and $R_2$ in the amines may also contain polyoxyalkylene groups, hetrocyclic groups, or, the

groups HN, $R_1$ and $R_2$ together may form a ring which may carry additional hetero atoms.

Typical examples of amines which can be used in preparing compounds of this invention are diethylenetriamine, di(methylethylene)triamine, triethylenetetramine, tri(methylethylene)tetramine, tri(ethylethylene)tetramine, tetraethylenepentamine, pentaethylenehexamine, ethylenediamine, hexamethylenediamine, o - phenylenediamine, m-phenylenediamine, p -phenylenediamine, alkyl-substituted o-, m- and p - phenylenediamine, dimethylaminomethylamine, dimethylaminoethylamine, dimethylaminopropylamine, dimethylaminobutylamine, dimethylaminoheptylamine, diethylaminomethylamine, diethylaminopropylamine, diethylaminoamylamine, dipropylaminopropylamine, methylpropylaminoamylamine, propylbutylaminoethylamine, dimethylenetrianilinemethylenedianiline, polymethyleneaniline polyalkylmethyleneaniline, morpholine, pyridine, piperidine, pyrrole, pyrimidine, pyrroline, pyrazine and pyridazine.

The formaldehyde reactant for this step can be used in the solid, liquid, gaseous or solution form. Typical sources are the normally used paraformaldehyde or formal (a 30%w/w aqueous solution of formaldehyde).

The reaction of the ozonolysis products with an amine and formaldehyde in step (b) is normally known as the Mannich reaction. Such a reaction and its mechanism are described, for example, in "Advanced Organic Chemistry" by March, J., Second Edition, pp820-823, published by McGraw-Hill Book Company (1977). This reaction can be catalysed by an acid or a base.

The sequence of addition of the reaction components is not critical although the amine and formaldehyde can be reacted initially at a relatively lower temperature e.g. 60°C in a solvent such as ethanol, and the ozonolysis products from step (a) can be added and thereafter, the entire mixture heated in a closed system at upto 180°C. If this reaction is carried out in an open reactor, lower temperatures of upto 70°C are recommended to avoid loss of volatile reactants and products.

For this reaction the molar ratio of amine to formaldehyde to the ozonolysis products is respectively 1-2:1-2:1, preferably 1:1:1.

A feature of the present invention is that by using a polybutene such as Ultravis (Regd. Trade Mark), which has a high degree of terminal unsaturation, for the ozonolysis step (a) at least part of the formaldehyde is generated as a by-product in situ and the Mannich reaction can be carried out directly with minimal addition of formaldehyde from an external source.

Where the formaldehyde reactant is generated in situ during the ozonolysis stage, the Mannich reaction is preferably carried out in a closed vessel at a temperature of at least 60°C.

The products of the Mannich reaction are amines containing carbonyl functions. In a preferred case, the value of n in the product (I) is 2. These amine products may be admixed in some cases with by-products of the reaction which e.g. can be the corresponding imines. The reaction products can be recovered from the reaction mixture by first washing with water (in the case of acid catalyst) or by a dilute aqueous acid (in the case of a base catalyst) followed by removal of unwanted low boiling fractions by stripping under vacuum or under an inert gas.

The amino carbonyl compounds can be used as such as additives for lube oils and fuels. However, if the products of the Mannich reaction are a mixture of amines and imines, such a mixture may be hydrogenated either to convert the imines to amines and/or to convert the carbonyl function in the mixture to the corresponding alcoholic or hydrocarbyl groups. Such hydrogenated products can subsequently be used as additives in lube oils or fuels.

The amine products of the present invention have the further advantage that there is substantially no resin formation during the synthesis thereof. Moreover, use of the high vinylidene polyisobutene reactant such as Ultravis (Regd. Trade Mark) gives a product free from any chlorine residues.

The present invention is further illustrated with reference to the following Examples.

Example 1

A sample of Ultravis 10 (Regd. Trade Mark, 100g), a high vinylidene polyisobutene of Mn 1000, was mixed with n-hexane (100ml) and methanol (50ml) in a reactor. A gas mixture containing ozone from a commercial ozoniser was sparged through the polyisobutene-solvent reaction mixture (at 15°C) for 4 hours. After this period, the supply of ozone was stopped and nitrogen was passed through the reaction mixture to remove any unreacted ozone from the reactor.

The reaction mixture was then vacuum stripped and the resultant residue was transferred to a 500ml flask containing a preheated (to 60°C) mixture of ethanol (50ml), formal (30% w/w aqueous solution of formaldehyde, 3g) and N,N$^1$-dimethyl-1,2-diamino ethane (8.8g) saturated with hydrogen chloride gas. The entire mixture,including the residue, was then refluxed for 6 hours at ambient pressure and subsequently treated with an excess of aqueous sodium hydroxide. The mixture was then cooled and allowed to separate into aqueous and organic phases. The organic phase was then recovered and evaporated under vacuum in a rotary evaporator. The resultant residue was substantially redissolved in toluene, filtered and the filtrate re-evaporated to give a viscous residue (102g) containing nitrogen.

This residue showed an infra-red adsorption in the region of 1750-1700cm$^{-1}$ thereby establishing the presence of carbonyl groups in the product.

Example 2

Equimolar amounts of Ultravis 10 (RTM) ozonolysis products (100g) prepared as described in Example 1 above and commercial tetraethylene pentamine (19g) were slowly heated to 180°C in a closed reactor with continuous agitation in the presence of formal (30% w/w aqueous solution of formaldehyde, 10g) for three hours. The reaction product was then stripped under vacuum for half an hour on a rotary evaporator to yield a residue (110g). This residue contained nitrogen and showed absorption in infra-red in the region of 1750-1700cm$^{-1}$ thus establishing the presence of carbonyl functions in the product.

Example 3

Ultravis (RTM) ozonolysis products (100g) prepared as described in Example 1 was admixed with N,N$^1$ dimethyl-1,3-diamino propane (10g) and placed in a closed reactor. The mixture was then slowly heated to 180°C with continuous agitation for three hours. The reaction mixture was then distilled slowly at atmospheric pressure. The heavy residue left behind after distillation was heated and vacuum stripped at 140°C in a rotary evaporator. The resultant final residue contained nitrogen and showed absorption in the infra-red region of 1750-1700cm$^{-1}$ thereby establishing the presence of carbonyl functions in the product.

Claims

1. A process for producing long chain alkyl amines of the formula
R-CO-(CH$_2$)$_n$-N(R$_1$)(R$_2$)     (I)
wherein R is the long chain aliphatic hydrocarbyl group derivable from a polyolefin, N(R$_1$)(R$_2$) is a nitrogen function derivable from a primary or a secondary amine, and n has a value of at least 1, said process comprising (a) reacting a polyolefin having a molecular weight in the range of 200-2000 with ozone in the presence of a solvent, (b) reacting the ozonolysis product from (a) with or without separation and/or isolation of the carbonyl compounds formed therein with a primary or secondary hydrocarbyl amine, of formula HN(R$_1$)(R$_2$) and formaldehyde at elevated temperature to form a compounds of formula (I).

2. A process according to claim 1 wherein the polyolefin which is ozonolysed is a polymer of C$_2$-C$_4$ olefin or a copolymer thereof and has a molecular weight in the region of 500-1500.

3. A process according to any one of the preceding claims wherein the ozonolysis of the polyolefin is carried out by bubbling ozone in the gaseous phase, with or without an additional diluent, through a solution of the polyolefin in a solvent.

4. A process according to any one of the preceding claims wherein the ozonolysis temperature is from -70 to +50°C.

5. A process according to any one of the preceding claims wherein the amine HN(R$_1$)(R$_2$) used to react with the ozonylysis product is selected from one or more of mono-, di- and polyamines which may be primary or secondary amines which are aliphatic, alicyclic, aromatic or heterocyclic in nature.

6. A process according to any one of the preceding claims wherein the reaction of the ozonolysis product from step (a) with the amine and formaldehyde in step (b) is carried out at a temperature of at least 60°C.

7. A process according to any one of the preceding claims wherein in the reaction of the ozonolysis products with the amine and formaldehyde, the respective molar ratios of the amine to formaldehyde to ozonylysis products is from 1-2:1-2:1.

8. A process according to any one of the preceding claims wherein at least part of the formaldehyde reactant for step (b) is generated in situ during step (a).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 285 088 (AMOCO) <br> * Claims 1-11; page 4, line 22 - page 5, line 36 * | 1-8 | C 08 F 8/32 |
| Y | EP-A-0 096 972 (STANDARD OIL) <br> * Claims 1-10 * | 1-8 | |
| Y | CHEMICAL ABSTRACTS, vol. 89, no. 10, September 1978, page 28, abstract no. 75883m, Columbus, Ohio, US; & JP-A-78 13 669 (FURUKAWA ELECTRIC CO., LTD) 11-05-1978 <br> * Abstract * | 1-8 | |
| A | EP-A-0 271 261 (BP CHEMICAL) <br> * Claims 1-17 * | 1 | |
| A | US-A-4 011 380 (C.T. WEST) <br> * Claims 1-21 * | 1 | |

TECHNICAL FIELDS
SEARCHED (Int. Cl.5)

C 08 F

The present search report has been drawn up for all claims

| Place of search | Date of completion of the search | Examiner |
|---|---|---|
| THE HAGUE | 08-11-1989 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)